# EUROPEAN PATENT APPLICATION

(11) **EP 1 744 505 A1**
(43) Date of publication of application: **17.01.2007**
(21) Application number: 06251951.7
(22) Date of filing: 06.04.2006
(51) Int. Cl.: H04L 12/56

(54) **Wireless ad-hoc network formation**

(30) Priority: 14.07.2005 GB 0514497
(71) Applicant: KABUSHIKI KAISHA TOSHIBA, Tokyo 105-8001 (JP)
(72) Inventor: Kalogridis, Georgios, Bristol BS1 4ND (GB)
(74) Representative: Round, Edward Mark

(57) **Abstract**

A wireless communications system comprising at least two piconets, each piconet comprising a plurality of wireless communications devices in direct communication with other devices within the same piconet, wherein the system comprises a bridging device capable of simultaneously communicating with communications devices in two separate piconets, the bridging device being capable of routing communications traffic from communications devices in the first of the two piconets to communications devices in the second of the two piconets

## Description

The present invention relates to the field of wireless communications and in particular relates to the formation of ad-hoc networks and associated communications devices.

An ad-hoc network is defined as a network composed solely of stations within mutual communications range of one another via a wireless medium, e.g. wireless personal area networks (WPAN) which convey information over relatively short distances amongst a relatively small number of participants. It is noted that in comparison to wireless local area networks (WLAN), WPAN arrangements involve little or no infrastructure.

The term "piconet" was originally introduced in relation to Bluetooth specifications but has now more generally been defined in IEEE802.15.3 (Wireless MAC and PHY specifications for High Rate WPANs) as a collection of one or more logically associated devices that share a single identifier with a common coordinator. A Piconet coordinator is an entity that has device functionality but which also provides coordination and other services (e.g. quality of service [QoS], synchronisation, association etc) via the wireless medium for the "one or more" devices within the piconet. Essentially therefore a piconet is an ad-hoc wireless network.

Generally in wireless technologies such as WPAN (e.g. Bluetooth or IEEE 802.15.1 or IEEE 802.15.3), WLAN (e.g. 802.1 1x), ultra-wide broadband (UWB) etc, a common radio frequency broadcast channel is used which is then shared by all the devices in the network (be they in a coordinated ad-hoc network such as a piconet or in an uncoordinated neighbouring network).

The OSI, or Open System Interconnection, model defines a networking framework for implementing protocols in seven layers. Control is passed from one layer to the next, starting at the application layer (layer 7) in one station, proceeding to the bottom layer, over the channel to the next station and back up the hierarchy.

The bottom layer, layer 1, is known as the Physical (PHY) layer. This layer conveys the bit stream (which could be an electrical impulse, light or radio signal) through the network at the electrical and mechanical level. It provides the hardware means of sending and receiving data on a carrier, including defining cables, cards and physical aspects. Fast Ethernet, RS232, and ATM are protocols with physical layer components.

Layer 2 is known as the Data Link layer and at this layer, data packets are encoded and decoded into bits. It furnishes transmission protocol knowledge and management and handles errors in the physical layer, flow control and frame synchronization. The data link layer is divided into two sublayers: The Media Access Control (MAC) layer and the Logical Link Control (LLC) layer. The MAC sublayer controls how a computer on the network gains access to the data and permission to transmit it. The LLC layer controls frame synchronization, flow control and error checking.

Layer 3, the Network layer, provides switching and routing technologies, creating logical paths, known as virtual circuits, for transmitting data from node to node. Routing and forwarding are functions of this layer, as well as addressing, intemetworking, error handling, congestion control and packet sequencing.

In the wireless technologies mentioned above (WPAN, WLAN, UWB etc) the PHY layer coordinates sharing between different piconets. A wireless device is normally able to set up or join a distinct wireless network and multiple piconets should, ideally, be able to coexist with one another.

The PHY layer shares the wireless medium between piconets by negotiating parameters such as the modulation scheme, the transmission power and the logical channel(s) to occupy. It is the aim of the PHY later that the wireless medium is used efficiently and that interference between piconets is minimised.

The MAC sub-layer is conventionally found on top of the PHY layer and is responsible for managing one piconet's share of the wireless medium. The MAC layer may support direct communications among devices or communications via a master control station.

Additionally, it will be responsible for complex management procedures such as association, disassociation, re-association, hand-over, etc. Its major task, however, is to organise access to the available bandwidth in the most efficient way. This could either mean exploiting as much of the available bandwidth as possible, supporting prioritised traffic and QoS, being fair to all participants, and doing all these with the minimum time latency and bandwidth overhead. The MAC needs also to be adapted to special PHY characteristics and to exploit PHY features that will improve its performance.

Some wireless networks, e.g. multi-hop ad-hoc networks, also require routing protocols (which are handled by the NETWORK layer) to optimise piconet formation and traffic routes.

The traditional set-up for wireless networks can therefore be regarded as two level sharing between the PHY layer (for sharing resources between co-existing wireless networks) and the MAC layer (for sharing resources among devices within a specific wireless network). In this traditional methodology the PHY channel is engineered to cover as many wireless devices as possible and a sophisticated MAC protocol is designed to take advantage of the PHY channel.

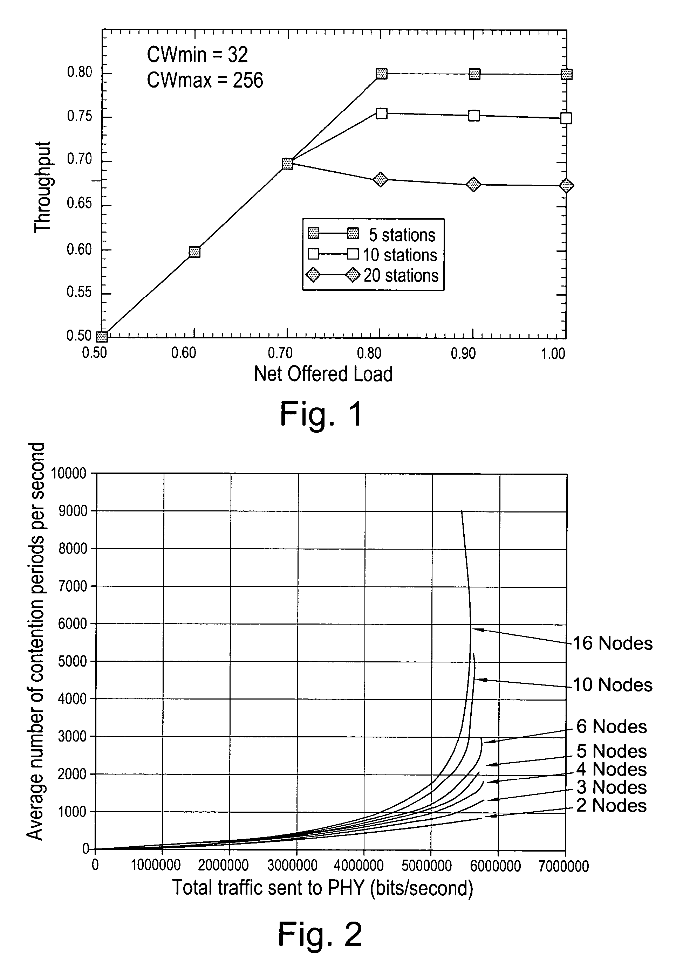

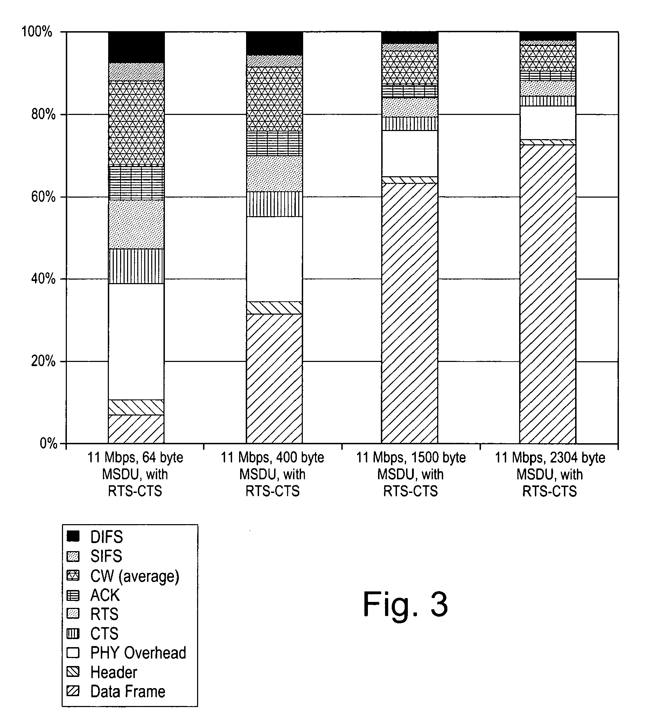

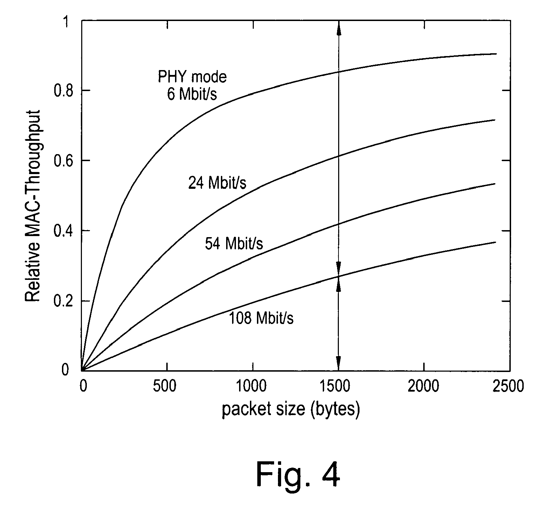

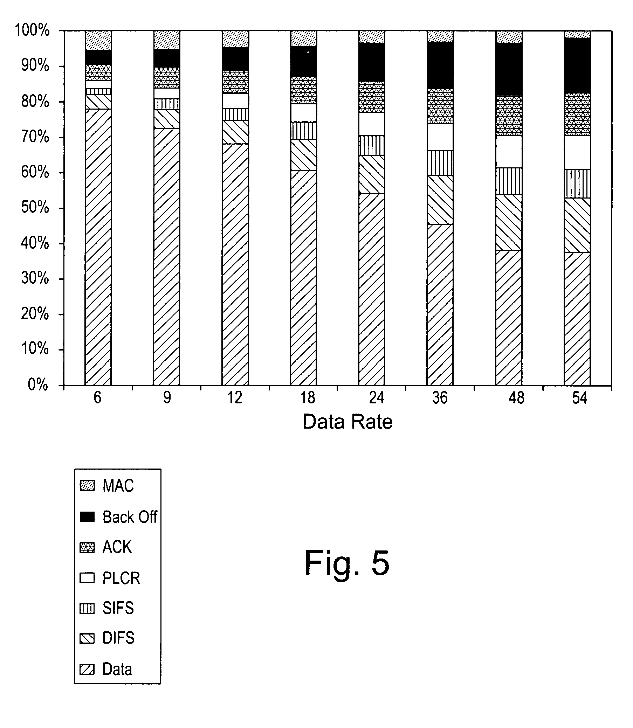

The above approach suffers from the drawback of overheads introduced by the MAC management layer. In particular the following drawbacks related to current approaches are noted:
1) Theoretical and simulation results suggest that as the number of nodes or the traffic loads increase, MAC performance drops. This can be seen in Figure 1 which depicts an analysis of the carrier sense multiple access with collision detection (CSMA/CD) mechanism of the 802.11 MAC. In the Figure it can be seen that throughput drops the net load increases.
2) Conventional MAC protocols support large numbers of devices which inevitably leads to complex management procedures. Inefficiencies are inherent in such a MAC set-up. For example, the number of collisions increases as traffic and node number increase even if a collision avoidance scheme is present. Figure 2 illustrates this point and shows the average number of contention periods per second for a system that incorporates RTS-CTS (Request-to-Transmit; Clear-to-Transmit).
3) MAC efficiency can be increased by creating a larger MAC Protocol Data Unit (MPDU) ― see Figure 3 and similarly by utilising a larger MAC data packet (MAC service data packet ― MSDU). However, as the MSDU or MPDU are increased the latency within the system is also increased since as traffic increases some devices will statistically have to wait a long time before they get access to the medium.
4) It is further noted that the above problems become worse when the data rate of the PHY layer increases. See for example, Figures 4 and 5 which respectively show the throughput versus packet size for different frame rates and 802.11 a Frame Occupancy for different frame rates.

It is therefore an object of the present invention to provide methods and apparatus which substantially mitigate or overcome the above mentioned problems.

According to a first aspect the present invention provides a wireless communications system comprising at least two piconets, each piconet comprising a plurality of wireless communications devices in direct communication with other devices within the same piconet, wherein the system comprises a bridging device capable of simultaneously communicating with communications devices in two separate piconets, the bridging device being capable of routing communications traffic from communications devices in the first of the two piconets to communications devices in the second of the two piconets

As discussed above one of the problems with current approaches for wireless network set-ups is that the MAC protocol is responsible for all medium sharing issues (including quality of service) and all these intra-picnet sharing issues take place within the MAC frame which is controlled by the piconet coordinator.

The present invention recognises that in certain circumstances the wireless medium may be better exploited by using a greater number of piconets. In the present invention wireless communication between devices that form an ad hoc network (e.g. a piconet) no longer requires that all the devices use common RF resources within which access is managed by a MAC protocol (as is the case in prior art systems).

Instead in the present invention a communications system comprising a number of piconets is used. Each piconet may be configured differently such that its traffic and application requirements are best achieved. This may, for instance, mean that each piconet will utilise a different MAC protocol.

Devices in different piconets are unable in the present invention to communicate directly with one another and so communication between devices belonging to different piconets is achieved by bridging two piconets by means of a bridging device that can communicate with devices in each piconet.

In the present invention devices are clustered into different piconets depending on a number of factors. For example, in a collection of, for example, 10 devices it may be the case that the devices effectively fall into two separate groups wherein communications traffic takes place almost exclusively only between devices in the same group. In such a scenario the system resources may be more efficiently used if the 10 devices are grouped into two different piconets which are tailored towards the specific needs of the devices rather than having a single network which is managed by a large (and possibly over complex) MAC protocol.

Alternatively, it may be the case that there are other RF channels that can be exploited by dividing a piconet into a collection of individiual piconets.

In the present invention the clustering of devices into different piconets is managed by a bridging device that is capable of communicating with devices in different piconets. The bridging device is therefore capable of routing communications traffic from one piconet to another.

The present invention can increase MAC efficiency and also optimise acess to shared PHY resource. For example, MAC efficiency can be increased by reducing the PHY data rate (e.g. by splitting a large network into two smaller ones), by reducing the number of active nodes and by increasing the MAC frame size. PHY resources can be further optimised by reducing transmission power and interference between devices and by using more of the available RF resources.

Conveniently, the piconets in the present invention will utilise different frame structures. However, it may be the case that different piconets share the same physical channel and multiplexing techniques and differ only in the parameters that define them, e.g. frequency hopping sequence, time division multiplexing, frame size, mode of modulation , data rate etc.

Conveniently, the MAC protocols used in different piconets will be different. This would allow different specialised MAC protocols to be designed and used for different piconets thereby increasing the efficiency of the network.

In the event that all physical channels are in use the system according to the present invention may be arranged such that one piconet is the child piconet of another.

Preferably, the division of devices between piconets is not fixed and the system is dynamic. In such cases the bridging device can monitor system traffic and also intra and inter piconet traffic and re-distribute devices between piconets accordingly.

In a second aspect of the present invention there is provided a bridging communications device for use in a wireless communications system comprising two or more piconets, each piconet comprising a number of wireless communications devices wherein devices within a particular piconet are in direct wireless communication with other devices within the same piconet, the bridging device comprising means for communicating with a first piconet in the system and means for communicating with a second piconet in the system wherein the bridging device is capable of routing communications traffic from devices in the first piconet to devices in the second piconet.

As noted above, the bridging device may conveniently be capable of using different MAC protocols with each piconet.

In a third aspect the present invention provides a method of dividing an ad-hoc wireless network comprising a plurality of wireless communications devices from a single original piconet into two piconets comprising the steps of:
i) Evaluating the network and deciding that network efficiency may be increased by dividing the original piconet and separating a number of communications devices into a further piconet
ii) initiating the creation of the further piconet
iii) inviting communications devices identified in step (i) to join the further piconet
(iv) associating the devices in identified in step (i) with the further piconet wherein communications devices in the further piconet and communications devices remaining in the original piconet are in communication with one another via a wireless bridging communications device, the bridging device being capable of simultaneously communicating with communications devices in the two piconets.

In the third aspect of the present invention there is provided a method by which a first original piconet can be divided into two separate physical piconets and by which the wireless communications devices in the original piconet can be distributed between the original piconet and the new piconet.

Initially, it is assumed that all devices will be in a single piconet. The network can be constantly monitored in order to see if the available resources could be better used by dividing the network into a collection of piconets and distributing the wireless devices between piconets.

If it is evaluated that the network should be split then a device (usually the bridging device of the first and second aspects of the invention) will initiate creation of a new piconet. Once the new piconet has been created the initiating device will invite a number of the available wireless devices to join the new piconet. These invited devices will then associate with the new piconet according to standard well-known association procedures.

As with the first and second aspects of the invention a bridging device will communicate with devices remaining in the original piconet and devices that have associated with the new piconet.

Conveniently, the bridging device will be the piconet coordinator of the new further piconet.

Evaluation of the original piconet for division into two separate ad-hoc networks can conveniently be performed by the bridging device. Alternatively, the piconet coordinator of the original network could evaluate the original piconet and notify the bridging device that the network should be divided.

It is expected that the bridging device will be one of the original plurality of devices in the original piconet. However, alternatively, the bridging device may be an independent wireless device.

Conveniently, the original and further piconet will utilise different MAC protocols.

Conveniently, devices joining the new piconet will not disassociate from the original piconet so that in the event that the piconets are merged in the future a further association procedure will not be required.

Conveniently, the division of devices between the original and further piconet is dynamic and devices can be moved from one piconet to another in order to maintain the most efficient use of resources. This process can conveniently be managed by the bridging device.

According to a fourth aspect of the present invention there is provided a data carrier comprising computer readable instructions that, when loaded onto a communications device, causes the device to operate as a bridging device as described in any of the above aspects of the present invention.

The operating program may be carried on a carrier medium, which may be a transmission medium or a storage medium.

The present invention will now be described with reference to the accompanying drawings in which:
Figure 1, hereinbefore discussed, illustrates Throughput versus Offered Load for the CSMA/CD Protocol
Figure 2, hereinbefore discussed, shows a plot of Average number of contention periods per second versus Total traffic for 802.11b, 11 Mbps PHY mode, 1500 byte MSDU with RTS-CTS
Figure 3, hereinbefore discussed, is a bar graph showing Durations of the constituent parts of 802.11b frame exchange sequences with RTS-CTS as a percentage of the overall duration
Figure 4, hereinbefore discussed, is a plot of Throughput versus Packet Size for different Data Rates
Figure 5, hereinbefore discussed, shows Occupancy of 802.11 a Frames for various data rates as a percentage of the total packet transmission time
Figure 6 shows an illustration of a network consisting of a number of piconets with devices clustered on a physical basis
Figure 7 illustrates the splitting of a piconet in accordance with an embodiment of the present invention
Figure 8 illustrates the changes at the MAC and PHY levels of the procedure shown in Figure 7
Figure 9 illustrates how a dynamic piconet manager in accordance with the present invention interacts with other layers
Figure 10 is a functional description of an embodiment of the present invention
Figure 11 is an example how the present invention may be applied to 802.15.3 piconets

Generally in traditional wireless technologies, once in a piconet a wireless device will not attempt to disassociate itself as long as it wants to communicate with one or more devices within the network and is within reception / transmission range.

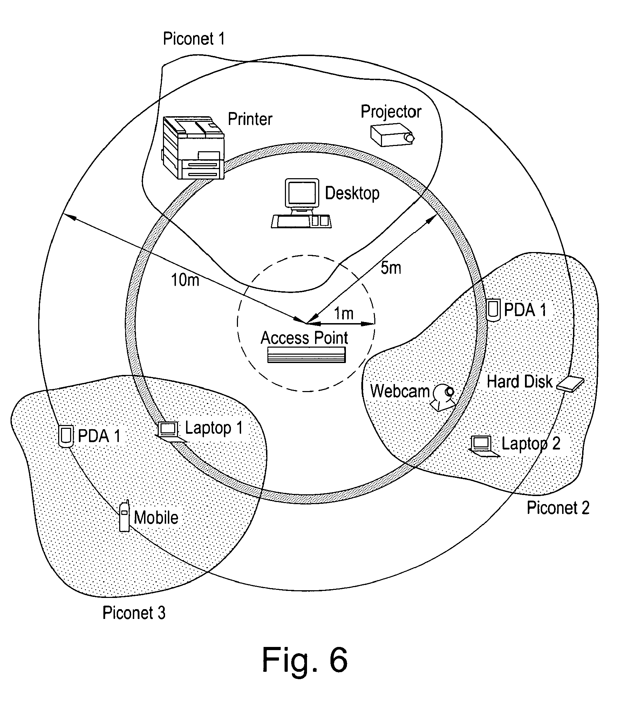

A piconet will split into two or more piconets and a network of piconets will be created only if it is necessary to cluster devices into piconets for reasons that have to do with the physical layer ― this is illustrated in Figure 6 in which a network of wireless devices have clustered into 3 separate piconets at varying distances from a central access point.

The devices will cluster for a variety of reasons such as the physical topology of all the devices, the physical distances and lines of sight between devices, the transmission power and interference issues. Once clustering has taken place the optimized network will be known to all devices and inter-piconet communication will take place through the wireless router (either at the network or the data link layer).

The present invention improves MAC performance and also maximises exploitation of the available RF spectrum by recognising that wireless devices within an ad hoc network (e.g. a piconet) do not have to use common RF resources within which access is managed by a single MAC protocol.

Instead, the present invention provides a mechanism in which a single piconet can be divided into a number of separate piconets which are still in communication with the first piconet via a wireless device capable of bridging traffic between piconets.

In the following discussion the terms "physical piconet" and virtual piconet" will be used.

A 'physical piconet' is collection of devices that communicate using common RF recourses. This definition is compatible with the ones used in 802.15.1 and 802.15.3 for the 'piconet' term.

A 'virtual piconet' is a collection of devices that communicate at the MAC layer without necessarily using common RF resources or even common MAC protocols. A 'virtual piconet' will consist of a number of 'physical piconets', which will intercommunicate with means that are described in the current invention. Peer devices that belong in the same 'virtual piconet' but in different 'physical piconets' are called 'virtual peers'. Virtual peers communicate with each other exactly the same way they would if they all belonged in the same 'physical piconet'. The mechanism for the inter-piconet communication is described below.

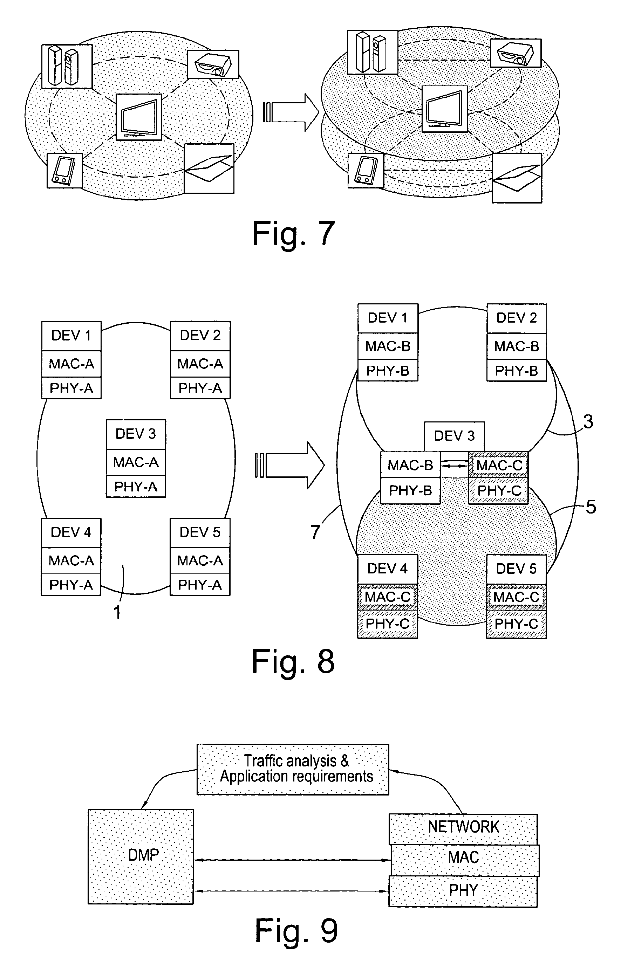

Figure 7 illustrates the basic process according to the present invention. A single piconet comprising five separate wireless devices is shown on the left hand side of Figure 7. This arrangement represents a configuration that is found in prior art systems.

In accordance with the present invention two or more devices in the single piconet decide that they should create their own piconet. The reasons for this decision are discussed above but may include increasing MAC efficiency, optimising the PHY layer by reducing transmission power and interference and also utilising more of the available RF resources.

The two or more devices that form the new physical piconet remain in communication with the remaining wireless devices in the original piconet by means of one of the wireless devices that is able to exist within two physical networks simultaneously and bridge inter-piconet traffic.

The two physical piconets that are formed in the above process are shown on the right hand side of Figure 7. The central device is now acting as a bridge between the top two devices (which exist in one of the two newly formed piconets) and the bottom two devices (which exist in the other of the two newly formed piconets).

The new arrangement can also be thought of as a single virtual piconet which comprises two physical piconets.

Figure 8 illustrates the various changes that occur at both the PHY and MAC layers when a piconet divides in accordance with the present invention. The situation before piconet division is depicted on the left hand side of Figure 8 and the situation after division is shown on the right hand side of the Figure. It is further noted that Figure 8 represents a more detailed view of the piconet division process depicted in Figure 7.

Figure 8 depicts a network comprising 5 different wireless devices, DEV1, DEV2, DEV3, DEV4 and DEV5. Initially, all five devices belong to the same piconet 1 and share a single MAC protocol, MAC A, and a single physical channel, PHY A.

DEV 3 is a wireless device in accordance with an aspect of the present invention that is capable of initiating and managing the division of the single piconet into two new physical piconets, a so called dynamic piconet manager (DPM). It is noted that the DPM is the "bridging device" of the above described aspects of the present invention.

Following piconet division DEV1 and DEV2 are in a different physical piconet 3 to DEV4 and DEV5 (which are in piconet 5). All five devices however are part of the same "virtual" piconet 7 since the DPM (DEV3) is capable of residing in both piconets simultaneously and is capable of bridging any inter-piconet traffic.

It is noted that the MAC protocols and PHY channels between the two piconets 3,5 have changed following the division of the original piconet. In piconet 3 the MAC protocol is now MAC B and the physical channel is PHY B. In piconet 5 the MAC protocol is now MAC C and the physical channel is PHY C. The dynamic piconet manager, DEV 3, however is capable of existing in both PHY B and PHY C and is shown to effectively bridge traffic at the MAC layer.

Although Figure 8 shows MAC B as different to MAC C and PHY B different to PHY C the following points are noted:
- MAC-B does not necessarily have to be different to MAC-A
- MAC-C does not necessarily have to be different to MAC-B
- PHY-A does not necessarily have to be different to PHY-B
- PHY-B will have to be different to PHY-C. However, PHY-B and PHY-C may still share exactly the same PHY frame structure and they may still share exactly the same physical channel and use exactly the same physical multiplexing techniques to access this channel. In this case PHY-B and PHY-C will just differ in their parameters that will define them (e.g. frequency hopping sequence, time division multiplexing, frame size, mode of modulation, data rate, etc...)

As noted above the present invention proposes a new distributed control manager that has been called the dynamic piconet manager (DPM). This manager will interact with the PHY, MAC and NETWORK layers and will dynamically take decisions that will influence the PHY and MAC layers. These structural relationships can be seen in Figure 9.

It is noted that the new mechanism can operate as an add-on device and does not necessarily have to substitute the (required) underlying MAC and PHY specifications.

A wireless node/device needs however to be capable of creating a new and/or joining in and disassociating with an existing piconet. If a device does not belong to any piconet, the DPM will not take any action at all. As such, the device can join in or create a piconet in the standard way.

If a device belongs to a piconet and all nodes contend for access to the network, the DPM will still not take any action, with one exception. If the device is the piconet's coordinating device, then the DPM of this device could decide to force all devices adopt a new MAC protocol, were that considered to be more efficient. The new MAC protocol for example could be engineered to perform best when all wireless devices demonstrate (for some period of time) stochastic traffic patterns. However, the exact mechanisms, which will determine whether another MAC protocol is more suitable or not, are out of the scope of this invention.

An aspect of the present invention is the division of a piconet into a more efficient arrangement of piconets. The main mechanism of division will be referred to herein as Dynamic Piconet Division (DPD) and operates as described below.

Consider a network that consists of a number of nodes all of which are organized into a one-hop ad hoc network, in one piconet. If two or more devices evaluate that (for reasons mentioned above) they should create their own piconet and still be part of the original piconet by means of a virtual piconet these two devices can initiate the DPD procedure.

If the devices of the second 'physical piconet' decide that the reasons for creating the virtual piconet are no longer valid, they can terminate the DPD procedure.

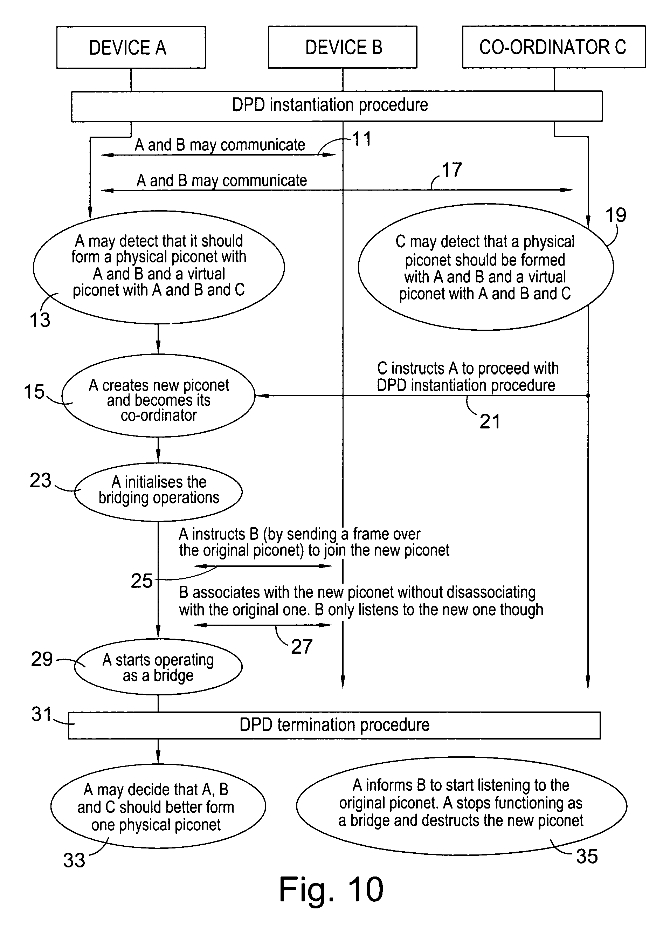

Figure 10 depicts the DPD procedure for an ad-hoc network comprising three devices A, B and C. In this network Device A has the capability of simultaneously being associated with two piconets (the original one and the forthcoming one), i.e. device A is a dynamic piconet manager. Device C is the original piconet coordinator.

The DPD procedure is as follows (see also Figure 10):
1) Initially the three devices communicate within the same piconet. The division of this initial piconet into two separate piconets can either be initiated by the DPM (Device a) or the original piconet coordinator (Device C). Both options are illustrated in Figure 10.
2) Option 1 ― DPD initiated by DPM. While A interacts with B (11), it may decide that would be better for A and B to form a separate physical piconet (13). Device A then creates the new piconet and becomes its coordinator (15). This is the usual process for the DPD procedure but as an alternative the division can be initiated by device C.
3) Option 2 ― DPD initiated by Device C. In this case, while there is still a single piconet device, A may request from Device C (as the coordinator of the original piconet) access to the medium or possible access with a higher priority than it currently has (17). Device C may then decide that it is better to proceed with a new piconet between A and B and a virtual piconet between A, B and C (19). Device C then instructs device A to proceed with the DPD procedure (21). Device A then creates the new piconet and becomes its coordinator (15).
4) In both of the initiation options discussed above device A will still belong to the original piconet that is coordinated by device C. The two physical piconets that are formed by the DPD procedure will form a virtual piconet and A will physically belong to both. Devices B and C will be virtual peers. A will become the piconet coordinator of the new piconet. Device A will create the new piconet using the available physical channel (that could be a free channel which has been detected after performing an appropriate search or it can be a channel proposed by the main piconet). The (new) physical layer(s) may dynamically adjust their modulation / coding / power parameters.
5) Following the creation of the new piconet (15), device A initiates bridging operations (23) and instructs device B (25) by sending a frame over the original piconet to join the new piconet.
6) B then joins the new piconet (27) by following a standard association procedure. B will not disassociate from the original piconet. However, from this point on B will not be able to listen to any wireless traffic in the original network, since this traffic will be transmitted in different (logical) physical channels, even if B is within reception range. In the most general case, other devices that also need to join the second piconet, will do that in the same fashion.
7) After Device B has joined the new piconet, Device A will begin operation as the wireless bridge between the two piconets (29) and will be adapted to forward traffic between inter-piconet peer devices. As such, if a frame originating from device C (or generally a wireless device belonging to the first piconet), is destined to device B (or generally a wireless device belonging to the second piconet), then device A (as the wireless bridge) will receive the frame from the first physical channel and will repeat it (re-transmit) in the second physical channel.
8) As an optional procedure Device A may impose a different, specialised MAC protocol for A and B to use in the second piconet (see, for example, Figure 8). This could further boost performance.

Following the division of an original piconet into two separate piconets, operating conditions across the virtual network may change thereby necessitating further changes to the network set up.

During operation, the inter-piconet wireless bridge and second piconet coordinator (device A) monitors all traffic that is exchanged between both intra-piconet and inter-piconet peer wireless devices. Based on this data, device A will be able to determine if the current virtual piconet should maintained, further expanded, or shrunk to the initial physical piconet. The DPD termination procedure (31) begins when device A decides that A, B and C should once again form a single piconet (33). The DPD termination procedure is as follows:
1) Once the termination procedure has been initiated Device A broadcasts a special command (35) to device B (and all the devices within the same piconet). This command requests that these devices re-attach themselves to the original physical piconet.
2) Device B (and all other similar devices) then adapt themselves to listen directly to all the frames transmitted within the original piconet. No association procedure is necessary, since these devices never disassociated with the original piconet.
3) Device A then ceases to function as a wireless bridge stops functioning, the second physical channel is not utilised any more and A only listens to the original piconet's channel, like all the other devices.

As noted above the fundamental advantage of the present invention is that it can boost MAC performance and it supports adaptation to application specific MACs (e.g. supporting QoS). The present invention also maximises exploitation of the available RF spectrum.

It is further noted that the present invention defines a capability to take some of the burden that the MAC layer conventionally carries for allocating resources within a piconet, and transferring it to the PHY. This is leveraged by deploying mechanisms for dynamic 'virtual piconets'.

The present invention is compatible with current technologies such as 802.11x and 802.15.3.

Examples of the present invention in typical practical systems will now be described. The following description makes reference to Figures 1-5.

### Example 1

In this example there are 10 devices that form a wireless network (in ad-hoc mode), in which access to the medium is controlled with a simple CSMA/CD MAC protocol. All devices want to access the common medium in order to send frames in a random manner. All devices statistically produce equal amounts of traffic and it is assumed that the overall traffic saturates the network. Thus MAC throughput reaches its maximum. The PHY data rate in the network is 48 Mbit/s.

If the results of Figure 5 are considered to apply in this scenario then it can be seen that there is around 38% payload throughput which effectively amounts to a data rate of 18.24 Mbit/s (38% of 48 Mbit/s = 18.24 Mbit/s).

It is now assumed that the 10 devices can be clustered in 2 groups of 5 devices and all traffic takes place exclusively between devices belonging to the same cluster.

Based on this assumption the piconet is split into two piconets, each one of which has half of the original PHY data rate. It is further assumed that the PHY is flexible enough to need half the RF resources when downgrading to a half PHY data rate piconet. So, in total, the two 'slower' piconets need the same physical RF resources as the original piconet. Each one of the new piconets contains devices according to the clusters noted above so that all communications are still valid.

If Figure 5 is considered again, the payload (data) throughput in each piconet is now 54% of the overall time that all frames occupy.

For a PHY data rate of 24 Mbit/s this amounts to an effective data rate of 12.96 Mbit/s. For both piconets the overall throughput is therefore 25.92 Mbit/s (2 times 12.96).

Therefore it can be seen that the division of the original piconet into two "slower" piconets actually offers an extra 7.68 Mbit/s improvement in throughput over the original 18.24 Mbit/s. This equates to a 42.1 % improvement.

It is further noted that this increase in performance can be improved further by acknowledging that each new piconet has a lower number of active devices (5 devices compared to the original 10 devices) which lead to an improvement in MAC efficiency (see Figure 2).

In effect the medium has been used more efficiently at the price of a much slower PHY transfer rate. However, what really matters is not the PHY transfer rate but what data rate will be available to each device.

With one fast piconet we have, on average 18.24 Mbps / 10 = 1.824 Mbps per device. With two slow piconets we have 12.96 Mbps / 5 = 2.592 Mbps per device. As noted above this represents a 42.1% improvement.

So by splitting the original piconet into two smaller piconets a gain margin has been produced.

In practice, it is noted that all 10 devices may still want to communicate with each other. This is enabled with the present invention by the wireless bridge. If it is assumed that the first 5 devices will not send too much data to the second 5, there should still be an improvement in the data rate available to each device above the 1.824 Mbps per device.

### Example 2

In this example there are again 10 devices which in this case form an IEEE 802.15.3 piconet. The 10 devices (e.g. A1, A2, A3, A4, A5, B1, B2, B3, B4, B5) transmit burst data to each other in a random manner. At some point, A1 will wish to initiate real-time video multicasting for A2, A3, A4 and A5 (e.g. A1 = laptop, A2-A5 = Displays, TVs, projectors, etc in different rooms).

For the purpose of this example it is assumed that traffic between Ai and Bj is not really significant (for example the cross traffic between Ai/Bj could have a mean value of 1 kilobyte per second).

It is assumed that the data rate of the video transmission (that A1 wishes to initiate) will amount to half of the mean data rate that is normally transmitted. In this particular example the original network has a mean data rate of 54 Mbits/s. The video PHY frame submission will therefore require 24 Mbit/s (inclusive of all PHY and MAC overhead). The remainder of the traffic in the network will have a mean of about 24 Mbit/s. The piconet coordinator in the 10 device piconet is B5.

According to the standard, time slots amounting up to of 24 Mbit/s could be allocated to A1 (after it requests B5 to do so). This means that 30 Mbit/s will remain for the rest of the traffic (consisting of management frames and contention free periods) on the network which will need to be shared among the 10 devices. If it is assumed that the contention free period is 24 Mbit/s (which equates to the amount required to satisfy the mean random traffic), and if a packet size of 1500 bytes is used, then the CSMA mechanism will waste a good amount of bandwidth.

The MAC efficiency can however be improved by initiating the DPD procedure of the present invention even while using the very same RF bandwidth.

The DPD procedure is initiated and two physical piconets are created. The original piconet physically contains B1-B5 and the new piconet contains A1-A5.

In splitting the devices into two groups the original piconet reduces its PHY data rate to half such that it operates at 28 Mbit/s instead of 56 Mbit/s. 24 Mbit/s will be used purely for contention access period and the rest is just for management and overheads.

One straight benefit of the DPD procedure is that at the lower data rate, less interference is bound to be produced, fewer errors will occur and transmission power may be reduced (if necessary).

It is also expected that MAC throughput efficiency will be improved. For example, if Figure 4 is considered, MAC throughput increases from 40% to 60% (for a packet size of 1500 bytes). This improvement of 20% amounts to an increase of 5 Mbit/s (20% of 24 Mbitls is roughly equal to 5 Mbit/s). Figure 5 suggest a similar improvement.

Next it is noted that following the DPD procedure the original physical piconet will now contain only 5 active devices instead of 10. Since access to this bandwidth is managed by a purely CSMA mechanism, the MAC throughput will, according to Figure 1, be increased from 75% to 80%. This extra 5% amounts to an extra 1.2 Mbit/s.

Figure 3 can also provide an explanation for the improvement in performance. Although Figure 3 applies to 802.11 it is noted that these simulation results can still be relevant since the same access mechanism is used (CSMA) in this example and in the system of Figure 1. With fewer nodes, when the traffic tends to increase, the mechanism is more robust against collisions.

Since there are fewer collisions after DPD division the packet size could also be increased from 1500 bytes to 2304 bytes. This would result in a much more efficient MAC, as seen in Figure 3.

The MAC performance of the second piconet could also be improved. Since the second piconet is to be used for a multicast video transmission, a special MAC optimised for this purpose could be used. This will be much more efficient than the allocation mechanism of the generic 802.15.3 MAC.

It is therefore noted for this example that DPD improves the overall MAC efficiency without requiring any additional RF resources. It is noted that communication between virtual devices will be inefficient and slow but the fundamental assumption in this example is that this type of traffic will be limited and of low priority.

DPD can also offer another benefit. If it is supposed that the original 54 Mbit/s piconet cannot in any way support the emerging video multicasting then the second piconet could just reserve extra RF resources so that overall there could be a virtual piconet with a compound data rate of, say, 2x54 Mbit/s.

### Example 3

As with Example 1, in this example there are 10 devices that form a wireless network (in ad-hoc mode), in which access to the medium is controlled with a simple CSMA/CD MAC protocol. The devices will be referred to as A1-A5 and B1-B5.

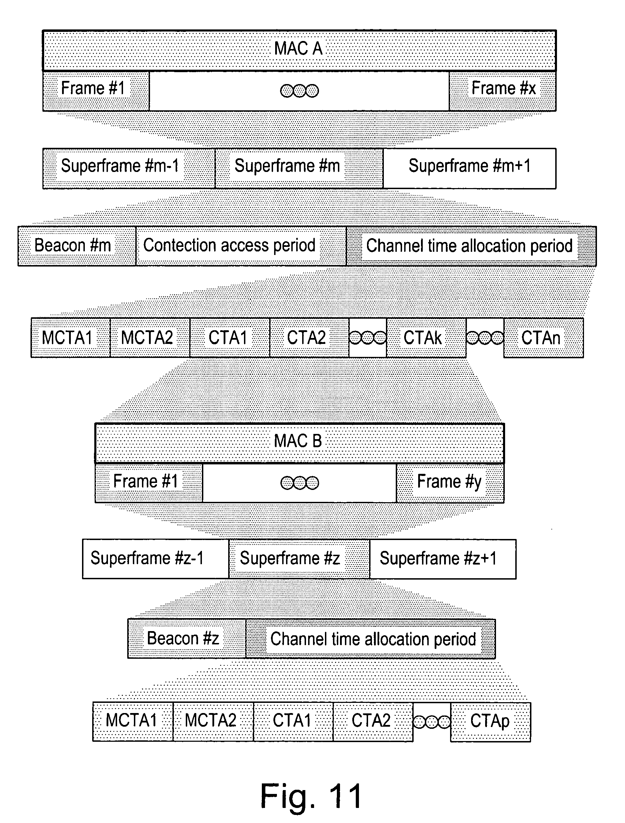

Access to the original piconet (of 10 devices) is managed by a MAC-A protocol and this is represented in Figure 11.

In this example device A1 wishes to transmit video frames with a certain Quality of Service. It is noted that A1 may ask to be granted allocated time channels (CTAs) in order to be able to transmit its video frames with the required QoS as described in 802.15.3 IEEE Standard for Information technology - Telecommunications and information exchange between systems - Local and metropolitan area networks - Specific requirements. Part 15.3: Wireless Medium Access Control (MAC) and Physical Layer (PHY) Specifications for High Rate Wireless Personal Area Networks (WPANs); Paragraphs 7.5.6 and 8.5.

Although the above approach will allow A1 to transmit its video frames it is the assertion of the inventors that the DPD/DPM procedure can achieve the same result in a much more efficient way ― even if the new piconet needs to be created in the same physical channel as the first piconet.

A1 may optionally scan the environment for an available channel (as described in the above referenced 802.15.3 Paper, Paragraph 8.2.1). If an available channel is found then A1 will use that. However, in this example it is assumed that all available channels are occupied by co-existing foreign piconets.

Thus, in this scenario, if all available channels are occupied, device A1 decides to initiate piconet division in accordance with the present invention and consequently sends a request to B5 to be granted permission to create a child piconet (as described in the above referenced 802.15.3 Paper, Paragraph 8.2.5). It is assume that this request is granted and B5 notifies A1 that it has been allocated a range of pseudostatic private CTA slots, slots CTA1 to CTAk in Figure 11.

With a range of time slots at its disposal device A1 then can initiate the DPD procedure in order to divide the initial piconet such that a child piconet is formed with A1 as the bridge between the original piconet (now containing devices B1 to B5) and the new child piconet (containing devices A2 to A5).

In more detail, in creating the child piconet, device A1 performs the following steps:
1. A1 creates the new piconet and starts transmitting its MAC superframes in the CTA1- CTAk gap (as illustrated in Figure 11).
2. A1 prepares to become the bridge between A2-A5 and B1-B5 (which is a DPD/DPM procedure).
3. A1 then sends a special request to A2-A5 to join the dynamic child piconet (this request will be sent over the original piconet channel) in accordance with the DPD/DPM procedure of the present invention. Assuming that A2-A5 want to maintain contact with B1-B5, they will not disassociate from the original piconet but they will stop listening to it (it is noted that this is contrary to the specifications of the 802.15.3 standard for child piconets).
4. Before associating with the child piconet, devices A2 to A5 send a confirmation to A1 (over the original piconet's channel), so that A1 can initiate it's bridging role. A2-A5 then associate with the child piconet in a standard manner.

The second piconet (the child piconet) can be adapted to primarily support unilateral (half-duplex) transmission of video frames over dedicated time channels. In this example a specialised proprietary MAC protocol is therefore used (this is MAC-B in Figure 11) which is capable of managing access as described below.

In the child piconet there is no need for any contention access period. Therefore the MAC superframe can consist of just the beacon and the allocation based period. The allocation based period can largely consist of guaranteed time slots (CTAs) and some management slots (MCTAs). The MCTA slots can be reduced to the minimum possible number as there will not be many management commands exchanged between two devices.

The MSDU (MAC Service Data Unit) may be increased in the child piconet since no other devices contend for the medium. This will further increase efficiency. It is noted however, the optimum MSDU size will still be limited by the BER (Bit-error-rate) and the overall quality of the wireless signal.

Inter-piconet communication between A2-A5 and B1-B5 will take place through device A1 which will act as the bridge between the original piconet and the child piconet. Device A1 will listen to both physical piconets (which will not be so difficult to do, due to the common PHY techniques that both of them are using) and access to the first network will be gained as the (standard) MAC-A protocol of the original piconet dictates. Access to the second network can just take place over the MCTAs (since all CTAs should be dedicated to the video transmission). This will not create much disruption, since intrapiconet traffic will be low.

### Example 4

In a further example, a home-based wireless network consists of the following 5 wireless devices, as seen in Figure 7.
- TV
- Video camera
- Speakers
- Laptop
- PDA

In this example the TV set is the only device sending data (sound) to the speakers. The TV's DPM can estimate the probability of the TV being the only device to send frames to the speaker in order to decide on the possibility of creating a sub-piconet comprising itself and the speakers.

If the TV's DPM decides to create a subpiconet in this manner it sends a request to the current piconet coordinator which in this example is the laptop computer.

The laptop will normally grant such a request and the TV can then initiate the DPD procedure according to the present invention.

The TV will then form a sub-piconet with the Speakers in which it is the coordinator. The TV, as DPM, will also act as the bridge between the two piconets and will therefore be able to communicate with any device of the parent piconet.

Following piconet division if another device, e.g. the PDA, wishes to send data (music) from the PDA towards the speakers this will now be captured by the TV which might either forward it (with minimum priority) to the speakers (which may be able to mix two music signals) or will just discard it. In the latter case the TV will send back a reply frame to the PDA saying that Speakers are currently occupied.

In setting up the second piconet the TV will normally scan the whole of its operating spectrum for available channels to operate the sub-piconet. If it finds a free channel then both the parent piconet and the sub-piconet will be able to take advantage of extra bandwidth.

In some circumstances the TV may find that there is another piconet operating (e.g. neighbours' home network) and in order to avoid interference with this other piconet it may decide to share the available bandwidth in its original piconet between the parent piconet and the sub-piconet (so that the total bandwidth is the same as before). The benefit in this case will now come from improved MAC performace in both piconets. The parent piconet's MAC can be adapted to allow 3 devices contest for access and the sub-piconet's MAC can be a completely proprietary one allowing maximum performance for unilateral streaming data transmission between two devices.

## Claims

1. A wireless communications system comprising at least two piconets, each piconet comprising a plurality of wireless communications devices in direct communication with other devices within the same piconet, wherein the system comprises a bridging device capable of simultaneously communicating with communications devices in two separate piconets, the bridging device being capable of routing communications traffic from communications devices in the first of the two piconets to communications devices in the second of the two piconets.

2. A wireless communications system as claimed in claim 1 wherein the first and second piconets use different PHY channels.

3. A wireless communications system as claimed in either of claims 1 or 2 wherein the first and second piconets use different MAC protocols.

4. A wireless communications system as claimed in any of claims 1 to 3 wherein the second piconet is a child piconet of the first piconet.

5. A wireless communications system as claimed in any of claims 1 to 4 wherein the bridging device monitors system and inter/intra-piconet communications traffic and organises the movement of communications devices between the two piconets as required in order to maximise system efficiency.

6. A bridging communications device for use in a wireless communications system comprising two or more piconets, each piconet comprising a number of wireless communications devices wherein devices within a particular piconet are in direct wireless communication with other devices within the same piconet, the bridging device comprising means for communicating with a first piconet in the system and means for communicating with a second piconet in the system wherein the bridging device is capable of routing communications traffic from devices in the first piconet to devices in the second piconet.

7. A bridging communications device as claimed in claim 6 wherein the device utilises a first MAC protocol with the first piconet that it is in communication with and utilises a second MAC protocol with the second piconet that it is in communication with.

8. A method of dividing an ad-hoc wireless network comprising a plurality of wireless communications devices from a single original piconet into two piconets comprising the steps of:
i) Evaluating the network and deciding that network efficiency may be increased by dividing the original piconet and separating a number of communications devices into a further piconet
ii) initiating the creation of the further piconet
iii) inviting communications devices identified in step (i) to join the further piconet
(iv) associating the devices in identified in step (i) with the further piconet
wherein communications devices in the further piconet and communications devices remaining in the original piconet are in communication with one another via a wireless bridging communications device, the bridging device being capable of simultaneously communicating with communications devices in the two piconets.

9. A method as claimed in claim 8 wherein the bridging device is the piconet coordinator of the further piconet.

10. A method as claimed in either of claims 8 or 9 wherein the bridging device evaluates the network and decides to divide the original piconet.

11. A method as claimed in any of claims 8 to 10 wherein the piconet coordinator of the original piconet evaluates the network and decides to invite the bridging device to divide the original piconet.

12. A method as claimed in any of claims 8 to 11 wherein, prior to division of the original piconet, the bridging device is one of the plurality of devices in the original piconet.

13. A method as claimed in any of claims 8 to 12 wherein the original and further piconets have different MAC protocols.

14. A method as claimed in any of claims 8 to 13 wherein devices associating with the further piconet do not disassociate with the original piconet.

15. A method as claimed in any of claims 8 to 14 wherein the bridging device monitors communications within each piconet and between the two piconets and moves communications devices between the two piconets as required in order to maintain the most efficient arrangement of network resources.

16. A data carrier comprising computer readable instructions that, when loaded onto a communications device, causes the device to operate as a bridging device as described in any of the above claims.
